# EUROPEAN PATENT APPLICATION

(11) **EP 3 132 689 A1**
(43) Date of publication of application: **22.02.2017**
(21) Application number: 15779220.1
(22) Date of filing: 14.04.2015
(51) Int. Cl.: A23L 17/00, A23B 4/044, A23L 27/00

(54) **FISH EXTRACT HAVING EXCELLENT FLAVOR AND PRODUCTION METHOD THEREFOR**

(30) Priority: 16.04.2014 JP 2014084469
(71) Applicant: Takasago International Corporation, Tokyo 144-8721 (JP)
(72) Inventor: WASHIZU, Yukio, Hiratsuka-shi Kanagawa 254-0073 (JP); EMOTO, Eiji, Hiratsuka-shi Kanagawa 254-0073 (JP); HIRAMOTO, Tadahiro, Hiratsuka-shi Kanagawa 254-0073 (JP)
(74) Representative: Zimmermann & Partner Patentanwälte mbB
(86) International application number: PCT/JP2015/061477
(87) International publication number: WO 2015/159885

(57) **Abstract**

The present invention provides a dried-fishes extract having excellent flavor and a production method therefor. In particular, the present invention provides a dried-fishes extract containing at least 150 ppm inosinic acid and at least 150 ppm anserine.

## Description

### Technical Field

The present invention relates to a dried-fishes extract having an excellent taste, and a method for producing the dried-fishes extract.

### Background Art

Dried fishes represented by dried bonito (KATSUOBUSHI) have been used as ingredients for seasonings, together with salt, sugar, soy sauce, soybean paste, and the like, and are food ingredients very popular in the Japanese lifestyle. Among the dried fishes, especially, dried bonito has been used very often with edible kelp (Kombu) in the form of a soup stock, which is an extract used for the purposes of the umami taste and the like. Dried bonito includes unmolded dried bonito (ARABUSHI) and molded dried bonito (KAREBUSHI). Most dried-bonito extracts, which are soup stocks from dried bonito, on the market are produced by using ARABUSHI, which is an unmolded ingredient, as an ingredient, because of limitations of the price. In general, dried-fishes extracts including dried-bonito extracts are placed on the market in the forms of soup stocks, soup stock powders, or soup stock concentrates. Various products of dried-fishes extracts including dried-bonito extracts using ARABUSHI as an ingredient have been already developed and put on the market. However, there has still been the price war, and hence there has still been a demand for a new extract which is inexpensive and strong in taste potency.

Known dried fishes and methods for producing dried fishes include the following. Japanese Patent Application Publication No. 2006-288203 describes a method for producing an odor component-containing extract, in which odor components distilled off at cooling condensation temperatures of 70°C or above are selectively collected during extraction of a first stock (ICHIBANDASHI) and/or a second stock (NIBANDASHI). Japanese Patent Application Publication No. Hei 10-57008 describes a desired dried-fish soup stock flavor comprising flavor components of a dried fishes and being obtained by extraction from the dried fishes with carbon dioxide in a liquefied state or a subcritical or supercritical state in the presence of water-containing alcohol. Japanese Patent Application Publication No. Hei 3-160971 describes a dried-fish soup stock flavor which comprises odor components obtained by reacting a ground powder obtained during dried-fish production with a fermented seasoning under heating, and subsequently performing co-extraction by bringing this mixture into contact with carbon dioxide in a liquefied state or a subcritical or supercritical state. Japanese Patent Application Publication No. 2006-094756 recites that an enzymatic degradation-type seasoning having an improved taste with no bitterness is obtained in a high extraction yield, and describes an enzymatic degradation-type seasoning obtained by degrading an aqueous dispersion of an ingredient containing meat or meat-derived animal proteins with an enzyme obtained from Pycnoporus coccineus at a pH of 2.0 to 6.0 and at a temperature of 30 to 70°C to prepare an extract. Japanese Patent Application Publication No. 2007-159550 describes a method for producing a dried-fishes extract comprising a dried-fishes extraction liquid obtained by extraction from a dried fishes using an aqueous acetic acid solution as a solvent. Japanese Patent Application Publication No. 2003-116484 recites that a seasoning is obtained in such a manner that a dried fish is crushed until the ratio of particles with diameters of 1 mm or less reaches 90% or higher, and then any one of a step of performing an enzymatic degradation treatment for 1 hour or more and a step of performing an extraction treatment in hot water is conducted first, wherein the total treatment time of the enzymatic degradation step and the extraction step is 10 hours or less. Japanese Patent Application Publication No. 2000-279124 describes an extraction method for obtaining an extract, in which a crushed dried fishes is packed into a column, an extract is collected by allowing water or an alcohol solution to pass through the column, and then, by using the same column, a proteolytic enzyme liquid is further allowed to pass through the extraction residue. Japanese Patent Application Publication No. Hei 1-300872 recites that a high-quality soup stock in which the umami taste, the bitter taste, miscellaneous tastes, and the like are well balanced is obtained in such a manner that a specific amount of a food ingredient which forms an amino acid having umami taste upon enzymatic degradation is added to a dried bonito residue from which a first stock (ICHIBANDASHI) has been obtained, and then enzymatic degradation is performed at a specific temperature.

### Summary of Invention

Until now, many soup stocks, soup stock powders, and soup stock concentrates have been already developed and put on the market. However, the price war continues day after day in the market of soup stocks, soup stock powders, and soup stock concentrates, and there has been a demand for a soup stock powder or soup stock concentrate which is richer in flavor and lower in price than existing commercial products, under the current situation.

The present invention has been made in view of the above-described problems, and an object of the present invention is to provide a dried-fishes extract having an unprecedentedly high potency and an unprecedentedly excellent taste without using an expensive dried fishes as an ingredient in a short period.

The inventors of the present application have found that the above-described object can be achieved by a dried-fishes extract comprising predetermined amounts of inosinic acid and anserine. This finding has led to the completion of the invention of the present application.

Specifically, the present invention provides a dried-fishes extract comprising 150 ppm or more of inosinic acid and 150 ppm or more of anserine. In addition, the present invention provides a method for producing the above-described dried-fishes extract, the method comprising the step of subjecting a suspension of a dried fishes to an enzymatic treatment using one or more enzymes selected from the group of nucleases, deaminases, and proteases, provided that cases where a protease or proteases alone are used are excluded.

The present invention makes it possible to obtain a dried-fishes extract having an excellent taste.

### Description of Embodiments

The present invention provides a dried-fishes extract comprising 150 ppm or more of inosinic acid and 150 ppm or more of anserine. The amount of inosinic acid in the dried-fishes extract of the present invention is preferably 150 ppm or more and 700 ppm or less and more preferably 200 ppm or more and 500 ppm or less.

The amount of anserine in the dried-fishes extract of the present invention is preferably 150 ppm or more and 3,000 ppm or less, and more preferably 150 ppm or more and 2,500 ppm or less. For example, the amount of anserine can be 200 ppm or more and 3, 000 ppm or less, and preferably 200 ppm or more and 2,500 ppm or less.

In addition, the dried-fishes extract of the present invention preferably further comprises hypoxanthine. The hypoxanthine may be formed by an enzymatic reaction of another component during production of the dried-fishes extract, or, if necessary, may be added from the outside. The amount of hypoxanthine in the dried-fishes extract of the present invention is preferably 200 ppm or more and 3, 000 ppm or less, and more preferably 200 ppm or more and 2, 500 ppm or less. For example, the amount of hypoxanthine can be 300 ppm or more and 2000 ppm or less, and preferably 500 ppm or more and 1500 ppm or less.

Preferably, the dried-fishes extract of the present invention comprises inosinic acid and anserine in the above-described amounts with a Brix value being 3.0 to 8.0. Preferably, the dried-fishes extract of the present invention comprises inosinic acid and anserine in the above-described amounts under a condition where the Brix value is 3.5 to 6.5.

Likewise, the dried-fishes extract of the present invention preferably comprises hypoxanthine in the above-described amount with the Brix value being 3.0 to 8.0. Preferably, the dried-fishes extract of the present invention comprises hypoxanthine in the above-described amount under a condition where the Brix value is 3.5 to 6.5.

The Brix value herein refers to a value obtained by subtracting the actually measured value of a solvent having the same concentration as that of the dried-fishes extract from the actually measured value of the dried-fishes extract, or, when the dried-fishes extract contains a salt, a value obtained by subtracting the actually measured value of a solvent which has the same concentration as that of the dried-fishes extract and to which the salt is added at the same concentration as the concentration at which the salt is added to the dried-fishes extract from the actually measured value of the dried-fishes extract. Note that each actually measured value refers to the reading of the measurement display value in measurement using a Brix meter (refractometer). The Brix meter is one of the analytical instruments based on the light refraction phenomenon, and shows the soluble solid content in an aqueous solution as an application of the light refraction phenomenon.

In the present invention, the dried-fishes extract is preferably one or more selected from dried bonito (KATSUOBUSHI), dried frigate mackerel (SODABUSHI), dried mackerel (SABABUSHI), dried sardine (IWASHIBUSHI), dried round herring (URUMEBUSHI), dried scad (MUROBUSHI), dried flying fish (AGOBUSHI), and dried tuna (MAGUROBUSHI). Of the above-described dried fishes, dried bonito, SODABUSHI, and MAGUROBUSHI are preferable, and dried bonito is particularly preferable.

The dried-fishes extract of the present invention may be produced by a method comprising the step of subjecting a suspension of a dried fishes to an enzymatic treatment using one or more enzymes selected from the group of nucleases, deaminases, and proteases, provided that cases where a protease or proteases alone are used are excluded. The nucleases, deaminases, and proteases used in the present invention are not particularly limited, and it is possible to use any one selected from those derived from various microorganisms such as molds, yeasts, and bacteria, those derived from plants, and those derived from animals.

The nucleases include Nuclease "Amano" (manufactured by Amano Enzyme Inc.), Sumizyme NP (manufactured by Shin-Nihon Chemical Co., Ltd.), and the like. Other nucleases can also be used without any problem. The deaminases include Deamizyme (manufactured by Amano Enzyme Inc.), Sumizyme DEA (manufactured by Shin-Nihon Chemical Co., Ltd.), and the like. Other deaminases can also be used without any problem. Meanwhile, the proteases include Protease N, Protease NL, Protease S, Prorazor FG-F, Papain W-40, Umamizyme, Peptidase R, Protease A, Protease P, and Protease M (each of which is from Amano Enzyme Inc.), Neutrase, Protamex, Alcalase, and Flavourzyme (each of which is from Novozymes), Bromelain (which is from Biocon (Japan) Ltd.), Orientase 22BF, Nucleicin, Orientase OP, Bromelain, Orientase 10NL, Orientase 90, Orientase 20A, and Orientase ONS (each of which is from HBI Enzymes Inc.), Denapsin 2P and Denazyme AP (each of which is from Nagase ChemteX Corporation), Sumizyme BR, Sumizyme FL-G, Sumizyme ACP, Sumizyme LP50D, Sumizyme AP, Sumizyme MP, Sumizyme FP, and Sumizyme LP (each of which is from Shin-Nihon Chemical Co., Ltd.), and the like. Other proteases can also be used without any problem. When multiple enzymes are used, the enzymes may be added in any order, and may be added simultaneously or separately.

The pH, the temperature, the period, the amount of the enzyme, and the like for the enzymatic treatment can be set, as appropriate, by a person skilled in the art according to the type and the amount of the dried fish, the type of the enzyme, and the like. For example, when a nuclease is used, the enzymatic treatment can be conducted by employing conditions of a pH of 4 to 7, a temperature of 40 to 70°C, a period of 0.5 to 40 hours, an amount of the enzyme of 0.005 to 1.0% (w/v), and the like. Meanwhile, when a deaminase is used, the enzymatic treatment can be conducted by employing conditions of a pH of 4 to 8, a temperature of 20 to 60°C, a period of 1 to 40 hours, an amount of the enzyme of 0.001% to 1.0% (w/v), and the like. Meanwhile, when a protease is used, the enzymatic treatment can be conducted by employing conditions of a pH of 4 to 8, a temperature of 30 to 60°C, a period of 1 to 40 hours, an amount of the enzyme of 0.001% to 1.0% (w/v), and the like.

After the above-described enzymatic treatment, the enzyme may be inactivated by heating the suspension, if necessary. The heating for this purpose can be conducted preferably at a temperature of 85 to 140°C for 10 to 120 minutes.

After the above-described enzymatic treatment is performed, a salt may further be added to the suspension, if necessary. The concentration of the salt can be determined, as appropriate, considering the balance among necessary flavor components, without any particular limitation. The salt is preferably added to be 0 to 29% (w/w), more preferably 0 to 20% (w/w), and further preferably 0 to 10% (w/w) in a final suspension to which an additional solvent described later has been added. The "salt" in the present invention preferably refers to sodium chloride. However, a salt containing components other than sodium chloride can also be used, and refined salt or common salt or unrefined salt containing bittern components can also be preferably used.

After the above-described enzymatic treatment is performed, water, ethanol, propylene glycol, glycerin, triacetin, or a solvent which is a combination of any ones of them is added to the suspension, if necessary. This makes it possible to further efficiently extract the essence from the dried fishes into the solution. The solvent is preferably a mixture of ethanol and water, and, for example, it is preferable to use 50% (w/w) or higher, 60% (w/w) or higher, 70% (w/w) or higher, 80% (w/w) or higher, 90% (w/w) or higher ethanol. In the above-described operation, the concentration of the additional solvents (excluding water) relative to the entirety of the suspension can be determined, as appropriate, considering the balance among necessary flavor components without any particular limitation. From the viewpoint of the flavor, the solvent is added to be preferably 0 to 90% (w/w), and more preferably 0 to 70% (w/w) in the dried-fishes extract obtained by the extraction.

After the above-described solvent is added, the suspension is placed under an environment where the temperature, the period, the pressure, and the like are adjusted, as appropriate, so that the extraction of the essence can be promoted. Here, the temperature, the period, the pressure, and the like are not particularly limited, and can be determined, as appropriate, by a person skilled in the art. The temperature of the solvent may be preferably 4 to 80°C, and further preferably 30 to 70°C. The period may be preferably 0.5 to 24 hours, and further preferably 1 hour to 5 hours. Regarding the pressure, any of a normal pressure condition, a reduced pressure condition, and a pressurized condition is acceptable. The pressure is preferably a normal pressure condition. After the above-described operation, the solid content is removed by filtration or the like, so that a final dried-fishes extract can be obtained.

In addition, in the method of the present invention, odor components can be removed from the obtained dried-fishes extract of the present invention.

A method for removing an odor component is not particularly limited, and an ordinarily employed method for removing an odor component can be used. Especially, an adsorption treatment, liquid-liquid extraction, supercritical extraction, distillation, membrane separation, and the like are preferable. An adsorption treatment is further preferable.

Odor adsorbents used in the adsorption treatment include, but are not limited to, activated carbon, silica gel, alumina, zeolite, synthetic adsorbents, ion-exchange resins, porous glass, cyclodextrins, and the like. Activated carbon and synthetic adsorbents are preferable, and synthetic adsorbents are further preferable.

Regarding a method for the liquid-liquid extraction, the liquid-liquid extraction can be performed by adding water and an organic solvent to a solvent extraction product, and then removing the organic solvent layer portion. The organic solvent is not particularly limited, and ethyl acetate, hexane, or the like can be used.

Meanwhile, regarding a method for the distillation, the distillation can be performed by distilling the solvent extraction product, and removing the distillate.

The extract from which the odor has been removed may be concentrated by a known concentration technique such as membrane concentration or vacuum concentration. The extract from which the odor has been removed may also be prepared in a powder form by a known drying technique such as freeze drying or hot air drying.

The dried-fishes extract may be in a form of a mixture with a suitable diluent or carrier. Examples of the diluent or carrier include solid diluents or carriers such as gum arabic, dextrin, glucose, and sucrose, and liquid diluents or carriers such as water, ethanol, propylene glycol, glycerin, sorbitol, triacetin, and surfactants. The taste-improving agent of the present invention may be, for example, in a powder form, a granular form, a liquid form, an emulsion form, or other suitable forms. Alternatively, the taste-improving agent of the present invention may be in a liquid form by being dissolved in, for example, ethanol, propylene glycol, glycerin, sorbitol, triacetin, or a mixture of any ones of them. Moreover, the taste-improving agent of the present invention may be prepared in a powder form by adding a suitable amount of an excipient such as dextrin, as appropriate.

Regarding the amount of the dried-fishes extract added to a food or beverage, the dried-fishes extract can be added to a food or beverage, unless the original flavor or taste is impaired. The amount is preferably in a range from 0.01 to 30% (w/w), and further preferably in a range from 0.1 to 10% (w/w) based on the food or beverage.

In addition, the dried-fishes extract of the present invention can be added to any food or beverage. Such foods and beverages include, but are not limited to, soups such as soup stock, Chinese soup, stew, and curry, processed foods using meat, chicken, seafood, or the like as an ingredient, seasonings, Furikake (rice seasonings), instant foods, snack foods, canned foods, dairy products, confectionery products, cold sweets, and the like.

### [Examples]

Hereinafter, the present invention is described more specifically based on Examples; however, the present invention is not limited at all to these Examples.

### [Example 1]

To 31 g of KATSUOBUSHI ARABUSHI SOSAI (dried bonito, unfermented, coarsely crushed) HU-MS (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, inosinic acid was added to achieve an inosinic acid concentration in the extract of 200 ppm, and hypoxanthine was added to achieve a hypoxanthine concentration in the extract of 200 ppm. Thus, Example 1 was obtained.

### [Example 2]

To 31 g of HONKAREBUSHI (Dried bonito, repeatedly fermented) (made in IBUSUKI) (manufactured by yamakichi_kunisawahyakuma Co., Ltd.) shaved with a plane, 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, inosinic acid, anserine, and hypoxanthine were added to achieve an inosinic acid concentration in the extract of 200 ppm, an anserine concentration in the extract of 200 ppm, and a hypoxanthine concentration in the extract of 200 ppm. Thus, Example 2 was obtained.

### [Example 3]

To 31 g of KATSUOBUSHI ARABUSHI SOSAI HU-MS 05 (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.) was added, and the reaction was allowed to proceed with stirring at 50 °C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 3 was obtained.

### [Example 4]

To 31 g of KATSUOBUSHI ARABUSHI SOSAI HU-MS (manufactured by Izumi Shokuhin Co., Ltd.), 62 g of water was added, followed by sterilization at 90°C for 20 minutes. To the sterilized suspension, 0.1 g of Deamizyme (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 4 was obtained.

### [Example 5]

To 31 g of KATSUOBUSHI ARABUSHI SOSAI HU-MS (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.) and 0.1 g of Deamizyme (manufactured by Amano Enzyme Inc.) were added, and the reaction was allowed to proceed with stirring at 50°C for 20 hours. After the reaction, 15 g of refined salt (manufactured by The Salt Industry Center of Japan.) was added to the reaction liquid, and inactivation was carried out under heating at 105°C for 30 minutes. After the inactivation of the enzyme, the reaction liquid was cooled, and 76.4 g of 95% ethanol was added. Extraction was carried out with stirring at 40°C for 2 hours, and then the solid content was removed by filtration. Thus, Example 5 was obtained.

### [Example 6]

To 31 g of KATSUOBUSHI ARABUSHI SOSAI HU-MS (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.) and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 6 was obtained.

### [Example 7]

To 31 g of KATSUOBUSHI ARABUSHI SOSAI HU-MS (manufactured by Izumi Shokuhin Co., Ltd.), 62 g of water was added, followed by sterilization at 90°C for 20 minutes. To the sterilized suspension, 0.1 g of Deamizyme (manufactured by Amano Enzyme Inc.) and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 7 was obtained.

### [Example 8]

To a mixture obtained by adding 10 g of dried-bonito extract B-60 (manufactured by Maruhachi Muramatsu, Inc.) to 21 g of KATSUOBUSHI ARABUSHI SOSAI HU-MS (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, 15 g of refined salt (manufactured by The Salt Industry Center of Japan.) was added to the reaction liquid, and inactivation was carried out under heating at 105°C for 30 minutes. After the inactivation of the enzyme, the reaction liquid was cooled, and 76.4 g of 95% ethanol was added. Extraction was carried out with stirring at 40°C for 2 hours, and then the solid content was removed by filtration. Thus, Example 8 was obtained.

### [Example 9]

To 31 g of SABABUSHI (dried mackerel) powder (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.), 0.1 g of Deamizyme (manufactured by Amano Enzyme Inc.), and 0.1 g of Protease A "Amano" G (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 9 was obtained.

### [Example 10]

To 31 g of MUROBUSHI (dried scad) powder (manufactured by Izumi Shokuhin Co., Ltd.), 62 g of water was added, followed by sterilization at 90°C for 20 minutes. To the sterilized suspension, 0.1 g of Deamizyme (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 10 was obtained.

### [Example 11]

To 31 g of MAGUROBUSHI (dried tuna) powder (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.) and 0.1 g of Deamizyme (manufactured by Amano Enzyme Inc.) were added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 11 was obtained.

### [Example 12]

To 31 g of SODABUSHI (dried frigate mackerel) powder (manufactured by Izumi Shokuhin Co., Ltd.), 62 g of water was added, followed by sterilization at 90°C for 20 minutes. To the sterilized suspension, 0.1 g of Nuclease "Amano" (manufactured by Amano Enzyme Inc.) and 0.1 g of Deamizyme (manufactured by Amano Enzyme Inc.) were added, and the reaction was allowed to proceed with stirring at 50 °C for 20 hours . After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Example 12 was obtained.

### [Comparative Example 1]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 1 was obtained.

### [Comparative Example 2]

To 31 g of HONKAREBUSHI (made in IBUSUKI) (manufactured by yamakichi_kunisawahyakuma Co., Ltd.) shaved with a plane, 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 2 was obtained.

### [Comparative Example 3]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, 0.1 g of Protease A "Amano" G (manufactured by Amano Enzyme Inc.) was added, and the reaction was allowed to proceed with stirring at 50°C for 20 hours. After the reaction, the reaction liquid was heated at 105°C for 30 minutes to perform inactivation. After the inactivation of the enzyme, the reaction liquid was cooled, and 76.4 g of 95% ethanol was added. Extraction was carried out with stirring at 40°C for 2 hours, and then the solid content was removed by filtration. Thus, Comparative Example 3 was obtained.

### [Comparative Example 4]

To 31 g of KATSUOBUSHI ARABUSHI SOSAI HU-MS (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. To the resultant extract, inosinic acid was added to achieve an inosinic acid concentration in the extract of 70 ppm. Thus, Comparative Example 4 was obtained.

### [Comparative Example 5]

To 31 g of SABABUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 5 was obtained.

### [Comparative Example 6]

To 31 g of MUROBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 6 was obtained.

### [Comparative Example 7]

To 31 g of MAGUROBUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 7 was obtained.

### [Comparative Example 8]

To 31 g of SODABUSHI powder (manufactured by Izumi Shokuhin Co., Ltd.), 62 g of water was added, followed by sterilization at 90°C for 20 minutes. After the sterilization, the mixture was cooled, and 76.4 g of 95% ethanol was added. Extraction was carried out with stirring at 40°C for 2 hours, and then the solid content was removed by filtration. Thus, Comparative Example 8 was obtained.

### [Sensory Evaluations]

Sensory evaluations were conducted by eight professional panelists, and the average values thereof were calculated. For each of the sensory evaluations, the following 8-point scale evaluation (8 to 0) was carried out.

| | |
|---|---|
| Very good (Verv tasty) | 7 points |
| Sufficiently good (Sufficiently tasty) | 6 points |
| Rather good (Rather tasty) | 5 points |
| Good (Tastv) | 4 points |
| Some what good (Somewhattasty) | 3 points |
| Difference is noticeable (S lightly tasty) | 2 points |
| Unchanged (similar to centrol) | 1 point |
| Deteriorated (Unpalatable) | 0 points |

### [Sensory Evaluation 1]

To 49.9 g of a commercially available Japanese-style noodle soup base (KATSUOBUSHI-YA NO DASHI MENTSUYU, 2-fold concentrate, manufactured by YAMAKI Co., Ltd.), 49.9 g of ion-exchanged water was added, followed by mixing. To this mixture, 0.2 g of each of the extracts of Examples and Comparative Examples was added, and a sensory evaluation was conducted by eight professional panelists. The result is shown below.

### <Result 1>

| | | Extract evaluated | Values measured by capillary electrophoresis | | | Sensory evaluation results |
|---|---|---|---|---|---|---|
| | | | IA (ppm) | Ans (ppm) | Hyp (ppm) | |
| Comp. Ex. | 1 | ARABUSHI <Brix:3.9> | 46 | 259 | 140 | 1.0 |
| | 2 | HONKAREBUSHI(made in BUSUKD <Brix:4.2> | 68 | n.d. | 160 | 1.5 |
| | 3 | ARABUSHI × protease <Brix:4.1> | 49 | 79 | 180 | 2.1 |
| | 4 | ARABUSHI+ (IA added at final concentration of 70 ppm) <Brix:4.0> | 70 | 259 | 140 | 2.4 |
| Ex. | 1 | ARABUSHI+ (IA added at final concentration of 200 ppm) + (Hyp added at final concentration of 200 ppm) <Brix:4.1> | 200 | 259 | 200 | 5.9 |
| | 2 | HONKAREBUSHI (made in BUSUKD + (IA added at final concentration of 200 ppm) + (Ans added at final concentration of 200 ppm) + (Hyp added at final concentraton of 200 ppm) <Brix:4.0> | 200 | 200 | 200 | 5.6 |
| | 3 | ARABUSHI × nuclease <Brix:4.2> | 221 | 237 | 205 | 6.3 |
| | 4 | ARABUSH I × deaminase <Brix:4.2> | 282 | 260 | 547 | 6.1 |
| | 5 | ARABUSHI × nuclease × deaminase <Brix:4.7> | 330 | 223 | 533 | 6.4 |
| | 6 | ARABUSHI × nuclease × protease <Brix:4.5> | 346 | 306 | 358 | 6.8 |
| | 7 | ARABUSHI × deaminase × protease <Brix:4.4> | 346 | 308 | 630 | 6.9 |
| | 8 | ARABUSHI × nuclease × deaminase × protease <Brix:5.0> | 240 | 273 | 615 | 6.4 |

| | | | | | | |
|---|---|---|---|---|---|---|
| * IA**:** Inosinic acid, Ans:anserine, Hyp:hypoxanthine, n.d.= = not detected | | | | | | |

(The concentrations of inosinic acid, anserine, and hypoxanthine were those of the extracts before dilution for the sensory evaluation.)

### [Sensory Evaluation 2]

To 95.0 g of a commercially available retort curry (UMINOSACHI RESTAURANT Curry HOTATE, manufactured by Maruha Nichiro Foods, inc.), 5.0 g of each of the extracts of Examples and Comparative Examples was added, and a sensory evaluation was conducted by eight professional panelists. The result is shown below.

### <Result 2>

| | | Extract evaluated | Vaues measured by capillary electrophoresis | | | Sensory evaluation results |
|---|---|---|---|---|---|---|
| | | | IA (ppm) | Ans (ppm) | Hyp (ppm) | |
| Comp. Ex. | 1 | ARABUSHI<Brix:3.9> | 46 | 259 | 140 | 1.0 |
| Ex. | 2 | HONKAREBUSHI (made in BUSUKI) + (IA added at final concentation of 200 ppm) + (Ans added at final concentration of 200 ppm) + (Hyp added at final concentration of 200 ppm) <Brix:4.0> | 200 | 200 | 200 | 5.1 |
| | 6 | ARABUSHI × nuclease × protease <Brix:4.5> | 346 | 306 | 358 | 6.3 |

| | | | | | | |
|---|---|---|---|---|---|---|
| * IA : Inosinic acid, Ans:anserine, Hyp:hypoxanthine | | | | | | |

### [Sensory Evaluation 3]

To 96.0 g of a commercially available cream stew (TOPVALU CREAM STEW, manufactured by AEON Co., Ltd.), 4.0 g of each of the extracts of Examples and Comparative Examples was added, and a sensory evaluation was conducted by eight professional panelists. The result is shown below.

### <Result 3>

| | | Extract evaluated | Values measured by capillary electrophores is | | | Sensory evaluation resuts |
|---|---|---|---|---|---|---|
| | | | IA (ppm) | Ans (ppm) | Hyp (ppm) | |
| Comp. Ex. | 4 | ARABUSHI × (IA added at final concentration of 70 ppm) <Brix:4.0> | 70 | 259 | 140 | 2.4 |
| Ex. | 3 | ARABUSHI × nuclease <Brix:4.2> | 221 | 237 | 205 | 6.0 |
| | 7 | ARABUSHI × deaminase × protease <Brix:4.4> | 346 | 308 | 630 | 6.5 |

| | | | | | | |
|---|---|---|---|---|---|---|
| * **IA** : Inosinic acid, Ans: anserine, Hyp: hypoxanth he | | | | | | |

### [Sensory Evaluation 4]

To 99.9 g of a commercially available zero-calorie cola (Kobe kyoryuchi LAS Cola Zero, manufactured by Tominaga Boeki Kaisha, Ltd.), 0.1 g of each of the extracts of Examples and Comparative Examples was added, and a sensory evaluation was conducted by eight professional panelists in terms of the taste improvement effect on the commercially available zero-calorie cola. The result is shown below.

### <Result 4>

| | | Extract evaluated | Values measured by capillary electrophores is | | | Sensory evaluation results |
|---|---|---|---|---|---|---|
| | | | IA (ppm) | Ans (ppm) | Hyp (ppm) | |
| Comp. Ex. | 3 | ARABUSHI × protease <Brix:4.1> | 49 | 79 | 180 | 2.0 |
| Ex. | 1 | ARABUSHI+ (IA added at final concentration of 200 ppm) + (Hyp added at final concentration of 200 ppm) <Brix:4.1> | 200 | 259 | 200 | 5.6 |
| | 8 | ARABUSHI × nuclease × deaminase × protease <Brix:5.0> | 240 | 273 | 615 | 6.5 |

| | | | | | | |
|---|---|---|---|---|---|---|
| * IA : Inosinic acid, Ans:anserine. Hyp: hypoxanthine | | | | | | |

### [Sensory Evaluation 5]

A low-sodium Japanese-style noodle soup base (MENTSUYU) of the formula shown below was prepared, and 0.5 g of each of the extracts of Examples and Comparative Examples was added to 99. 5 g of the low-sodium Japanese-style noodle soup base. Then, a sensory evaluation was conducted by eight professional panelists in terms of the taste improvement effect on the low-sodium Japanese-style noodle soup base. The formula and the result are shown below.

### <Formula 5>

| Ingredients | Blending ratio (%) |
|---|---|
| Soy sauce | 5.0 |
| Sugar | 2.4 |
| Extract evaluated | 1.6 |
| Common salt | 0.1 |
| Potassium chloride | 0.6 |
| Ion-exchanged water | 90.3 |
| Total | 100.0 |

### <Result 5>

| | | Extract evaluated | Values measured by capillary electrophoresis | | | Sensory evaluation resuts |
|---|---|---|---|---|---|---|
| | | | IA (ppm) | Ans (ppm) | Hyp (ppm) | |
| Comp. Ex. | 2 | HONKAREBUSHI (made in BUSUKI) <Brix:4.2> | 68 | n.d. | 160 | 1.8 |
| Ex. | 4 | ARABUSHI × deaminase <Brix:4.2> | 282 | 260 | 547 | 5.8 |
| | 5 | ARABUSHI × nuclease × deaminase <Brix:4.7> | 330 | 196 | 533 | 6.1 |

| | | | | | | |
|---|---|---|---|---|---|---|
| * **IA** : Inosinic acid, Ans: anserine, Hyp: hypoxanthine, n.d.=not detected | | | | | | |

### [Sensory Evaluation 6]

To 49.9 g of a commercially available Japanese-style noodle soup base (KATSUOBUSHI-YA NO DASHI MENTSUYU, 2-fold concentrate, manufactured by YAMAKI Co., Ltd.), 49.9 g of ion-exchanged water was added, followed by mixing. To this mixture, 0.2 g of each of the extracts of Examples and Comparative Examples was added. Then, a sensory evaluation was conducted by eight professional panelists. The result is shown below.

### <Result 6>

| | | Extract evaluated | Values measured by capillary electrophoresis | | | Sensory evaluation results |
|---|---|---|---|---|---|---|
| | | | IA (ppm) | Ans (ppm) | Hyp (ppm) | |
| Comp. Ex. | 5 | SABABUSHI powder <Brix:3.8> | 126 | 128 | 182 | 2.1 |
| Ex. | 9 | SABABUSHI powder × nuclease × deamiase × protease <Brix:5.3> | 250 | 1207 | 681 | 6.3 |

| | | | | | | |
|---|---|---|---|---|---|---|
| * IA : Inosinic acid, Ans: anserine, Hyp: hypoxanth he | | | | | | |

### [Sensory Evaluation 7]

To 49.9 g of a commercially available Japanese-style noodle soup base (KATSUOBUSHI-YA NO DASHI MENTSUYU, 2-fold concentrate, manufactured by YAMAKI Co., Ltd.), 49.9 g of ion-exchanged water was added, followed by mixing. To this mixture, 0.2 g of each of the extracts of Examples and Comparative Examples was added, and a sensory evaluation was conducted by eight professional panelists. The result is shown below.

### <Result 7>

| | Extract evaluated | | Values measured by capillary electrophoresis | | | Sensory evaluation results |
|---|---|---|---|---|---|---|
| | | | IA (ppm) | Ans (ppm) | Hyp (ppm) | |
| Comp. Ex. | 6 | MUROBUSHI powder <Brix:5.8> | 134 | 1420 | 146 | 2.6 |
| Ex. | 10 | MUROBUSHI powder × deaminase <Brix:4.5> | 259 | 1870 | 645 | 6.5 |

| | | | | | | |
|---|---|---|---|---|---|---|
| * IA : Inosinic acid, Ans: anserine, Hyp:hypoxanthine | | | | | | |

### [Sensory Evaluation 8]

To 49.9 g of a commercially available Japanese-style noodle soup base (KATSUOBUSHI-YA NO DASHI MENTSUYU, 2-fold concentrate, manufactured by YAMAKI Co., Ltd.), 49.9 g of ion-exchanged water was added, followed by mixing. To this mixture, 0.2 g of each of the extracts of Examples and Comparative Examples was added, and a sensory evaluation was conducted by eight professional panelists. The result is shown below.

### <Result 8>

| | Extract evaluated | | Values measured by capillary electrophoresis | | | Sensory evaluation results |
|---|---|---|---|---|---|---|
| | | | IA (ppm) | Ans (ppm) | Hyp (ppm) | |
| Comp. Ex. | 7 | MAGUR0BUSHI powder <Brix:4.5> | 124 | 1170 | 173 | 2.3 |
| Ex. | 11 | MAGUROBUSHI powder × nuclease × deaminase <Brix:5.8> | 328 | 1280 | 612 | 6.3 |

| | | | | | | |
|---|---|---|---|---|---|---|
| * IA : Inosinic acid, Ans:anserine, Hyp:hypoxanthine | | | | | | |

### [Sensory Evaluation 9]

To 49.9 g of a commercially available Japanese-style noodle soup base (KATSUOBUSHI-YA NO DASHI MENTSUYU, 2-fold concentrate, manufactured by YAMAKI Co., Ltd.), 49.9 g of ion-exchanged water was added, followed by mixing. To this mixture, 0.2 g of each of the extracts of Examples and Comparative Examples was added, and a sensory evaluation was conducted by eight professional panelists. The result is shown below.

### <Result 9>

| | Extract evaluated | | Values measured by capillary electrophoresis | | | Sensory evaluation results |
|---|---|---|---|---|---|---|
| | | | IA (ppm) | Ans (ppm) | Hyp (ppm) | |
| Comp. Ex. | 8 | SODABUSHI<Brix:4.6> | 132 | 1300 | 155 | 2.5 |
| Ex. | 12 | SODABUSHI powder × nuclease × deaminase <Brix:6.1> | 316 | 1370 | 616 | 5.8 |

| | | | | | | |
|---|---|---|---|---|---|---|
| * IA : Inosinic acid, Ans: anserine, Hyp: hypoxanth he | | | | | | |

## Claims

1. A dried-fishes extract comprising 150 ppm or more of inosinic acid and 150 ppm or more of anserine.

2. The dried-fishes extract according to claim 1, comprising 200 ppm or more of hypoxanthine.

3. The dried-fishes extract according to claim 1 or 2, wherein
the dried fishes is one or more selected from dried bonito (KATSUOBUSHI), dried frigate mackerel (SODABUSHI), dried mackerel (SABABUSHI), dried sardine (IWASHIBUSHI), dried round herring (URUMEBUSHI), dried scad (MUROBUSHI), dried flying fish (AGOBUSHI), and dried tuna (MAGUROBUSHI).

4. A taste-improving agent comprising the dried-fishes extract according to any one of claims 1 to 3.

5. A method for producing the dried-fishes extract according to any one of claims 1 to 3, comprising the step of subjecting a suspension of dried fishes to an enzymatic treatment using one or more enzymes selected from the group of nucleases, deaminases, and proteases, provided that cases where a protease or proteases alone are used are excluded.
